(19) Europäisches Patentamt

European Patent Office

Office européen des brevets

(11) **EP 1 597 106 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(21) Anmeldenummer: **04709135.0**

(22) Anmeldetag: **07.02.2004**

(51) Int Cl.:
**B60K 31/00** (2006.01)

(86) Internationale Anmeldenummer:
**PCT/EP2004/001138**

(87) Internationale Veröffentlichungsnummer:
**WO 2004/076223 (10.09.2004 Gazette 2004/37)**

(54) **VERFAHREN ZUR ANSTEUERUNG EINES IN EINEM FAHRZEUG BEFINDLICHEN VERKEHRSADAPTIVEN ASSISTENZSYSTEMS**

METHOD FOR INITIATING A TRAFFIC-ADAPTIVE ASSISTANCE SYSTEM ARRANGED IN A VEHICLE

PROCEDE D'AMOR AGE D'UN SYSTEME D'ASSISTANCE ADAPTATIF EN FONCTION DU TRAFIC ET SITUE DANS UN VEHICULE

(84) Benannte Vertragsstaaten:
**DE FR GB IT**

(30) Priorität: **25.02.2003 DE 10308256**

(43) Veröffentlichungstag der Anmeldung:
**23.11.2005 Patentblatt 2005/47**

(73) Patentinhaber: **DaimlerChrysler AG**
**70567 Stuttgart (DE)**

(72) Erfinder: **KERNER, Boris**
**70619 Stuttgart (DE)**

(56) Entgegenhaltungen:
**EP-A- 1 063 626          EP-A- 1 225 079**

**Beschreibung**

Die Erfindung betrifft ein Verfahren zur Ansteuerung eines in einem Fahrzeug befindlichen verkehrsadaptiven Assistenzsystems mit geschwindigkeits- und / oder abstandsbezogenen Größen des Fahrzeugs und eines vorausfahrenden Fahrzeugs. Dabei beschleunigt und / oder verzögert das Assistenzsystem das Fahrzeug unter Verwendung dieser Größen.

Ein derartiges Verfahren ist aus der DE 10019190 A1 bekannt. Hier wird der Wert der Beschleunigung bzw. Verzögerung des Fahrzeugs durch das verkehrsadaptive Assistenzsystem durch eine untere und / oder eine obere Schranke begrenzt.

In der EP 0443644 A1 wird vorgeschlagen, ein verkehrsadaptives Assistenzsystem unter Verwendung einer Zieldistanz anzusteuern.

Die EP 1063626 A1 offenbart, ein verkehrsadaptives Assistenzsystem mit einzelnen unterschiedlichen Zeitabständen zu einem vorausfahrenden Fahrzeug bzw. einzelnen unterschiedlichen Distanzen zu einem vorausfahrenden Fahrzeug anzusteuern.

In der EP 1225079 A2 wird ein verkehrsadaptives Assistenzsystem mit einer Zieldistanz des Fahrzeugs zu einem vorausfahrenden Fahrzeug angesteuert.

Der vorliegenden Erfindung liegt die Aufgabe zugrunde, ein Verfahren zur Ansteuerung eines verkehrsadaptiven Assistenzsystems vorzuschlagen, das flexibel ist, ein den Eigenschaften realer Fahrzeugführer nachempfundenes Verhalten aufweist und zusätzlich gute Reaktionszeiten des verkehrsadaptiven Assistenzsystems ermöglicht.

Die Aufgabe wird gelöst durch die Merkmale der unabhängigen Ansprüche 1 und 2. Die Unteransprüche betreffen vorteilhafte Aus- und Weiterbildungen der Erfindung.

Der Hauptgedanke der Erfindung besteht darin, dass dann, wenn der Ist-Zeitabstand (d.h. die Ist-Zeitlücke) und / oder der Ist-Abstand (d.h. die Ist-Distanz) des Fahrzeugs zum vorausfahrenden Fahrzeug größer als ein vorgebbarer jeweiliger unterer und kleiner als ein vorgebbarer jeweiliger oberer Grenzwert ist, das verkehrsadaptive Assistenzsystem unter Ausschluss eines Ziel-Zeitabstandes angesteuert wird.

Durch die Erfindung wird bei der Ansteuerung des verkehrsadaptiven Assistenzsystems die herrschende Verkehrssituation und die Fahrthistorie des Fahrzeugs (z.B. das Fahrverhalten in den letzten 10 Minuten) quasi "automatisch" berücksichtigt. Denn wenn der Ist-Zeitabstand bzw. die Ist-Distanz des Fahrzeugs zum vorausfahrenden Fahrzeug größer als der vorgebbare untere und kleiner als der vorgebbare obere Grenzwert ist, wird kein Ziel-Zeitabstand bzw. keine Ziel-Distanz zur Ansteuerung des verkehrsadaptiven Assistenzsystems verwendet. Es ergibt sich eine besonders flexible Ansteuerung des verkehrsadaptiven Assistenzsystems, indem auf die Verwendung eines Ziel-Zeitabstandes bzw. einer Ziel-Distanz verzichtet wird, wenn der Ist-Zeitabstand bzw. die Ist-Distanz des Fahrzeugs zum vorausfahrenden Fahrzeug sich innerhalb der vorgebbaren Grenzwerte befindet. Dabei ist alternativ entweder nur ein Ist-Zeitabstand oder nur eine Ist-Distanz oder eine Kombination von beiden vorgesehen, wobei auch eine situationsabhängige Auswahl im Fahrzeug vorgesehen sein kann.

Während bei den im Stand der Technik dargelegten Verfahren zur Ansteuerung von verkehrsadaptiven Assistenzsystemen bei den "Auswirkungen" der Ansteuerung angesetzt wird - beispielsweise indem eine vom verkehrsadaptiven Assistenzsystem bestimmte Beschleunigung begrenzt wird - setzt die Erfindung früher an. Die Erfindung greift bei den "Ursachen" ein, indem sie direkt die zur Ansteuerung des verkehrsadaptiven Assistenzsystems vorgesehenen Größen selektiert. Mit anderen Worten wird es beim erfindungsgemäßen Verfahren möglich, einen zusätzlichen "Freiheitsgrad" einzuführen dadurch, dass der Ziel-Zeitabstand bzw. die Ziel-Distanz zwischen Fahrzeug und vorausfahrendem Fahrzeug nicht zur Ansteuerung verwendet wird. Somit wird beispielsweise der herrschenden Verkehrssituation dadurch Rechnung getragen, dass nach Abschluss des Beschleunigungs- bzw. des Verzögerungsvorgangs des Fahrzeugs durch das verkehrsadaptive Assistenzsystem (d.h. beim Vorliegen einer Differenzgeschwindigkeit von näherungsweise Null zwischen dem Fahrzeug und dem vorausfahrenden Fahrzeug) der dann bestehende Zeitabstand bzw. die dann bestehende Distanz zwischen den beiden Fahrzeugen nicht vorbestimmt ist.

Bei den im Stand der Technik dargelegten Verfahren zur Ansteuerung von verkehrsadaptiven Assistenzsystemen sind stets feste bzw. nach fest vorgegebenen Zusammenhängen bestimmte Zeitabstände bzw. Distanzen vorgesehen. Dagegen ist ein erfindungsgemäß als Ergebnis eines Beschleunigungs- oder Verzögerungsvorganges des Fahrzeugs erreichter Zeitabstand bzw. Distanz die Folge einer jeweiligen Verkehrssituation und / oder einer jeweiligen Fahrzeughistorie. Dies zeigt eindrucksvoll das den Eigenschaften realer Fahrzeugführer nachempfundene Verhalten des erfindungsgemäßen Verfahrens. Denn während erfindungsgemäß der Zeitabstand bzw. die Distanz jeden beliebigen Wert aus dem Intervall zwischen dem vorgebbaren unteren und dem vorgebbaren oberen Grenzwert annehmen kann (d.h. Auswahl aus unendlich vielen Werten), sind dies bei den im Stand der Technik dargelegten Verfahren nur ein einziger bzw. einige wenige diskrete Werte.

Eine besonders einfache Ausführungsform der Erfindung ergibt sich, wenn der untere Grenzwert und / oder der obere Grenzwert als eine jeweilige Konstante ausgeführt sind. Damit sind durchzuführende Berechnungen besonders schnell und nachvollziehbar durchführbar.

Noch flexibler anwendbar wird die Erfindung, wenn einer oder beide Grenzwerte abhängig von der Geschwindigkeit des Fahrzeuges und / oder der Geschwindigkeit eines weiteren Fahrzeuges, beispielsweise des vorausfahrenden Fahrzeuges, vorgebbar sind. Dies ermöglicht eine Berücksichtigung der jeweiligen Verkehrssituation.

In einer besonders vorteilhaften Ausführungsform der Erfindung ist vorgesehen, dass der untere und / oder der obere Grenzwert abhängig von der Art der an der Position des Fahrzeugs herrschenden Verkehrszustandsphase vorgebbar ist. Verkehrszustandsphasen kennzeichnen auf besonders einfache Weise den herrschenden Verkehrszustand. Eine Verkehrszustandsphase ist beispielsweise der gestauchte synchronisierte Verkehr. Diese Verkehrszustandsphasen werden in der Drei-Phasen-Theorie des Verkehrs näher erläutert, siehe z.B. B. S. Kerner, Phys. Rev. E Vol. 65, 046138, 2002.

Eine besonders große Flexibilität der Erfindung wird erreicht, wenn der untere Grenzwert und / oder der obere Grenzwert abhängig von der zeitlich-räumlichen Verteilung des Verkehrs in einer Umgebung des Fahrzeugs vorgebbar ist. Eine zeitliche Verteilung ist z.B. eine prognostizierte (zeitliche) Entwicklung des Verkehrs, eine räumliche Verteilung ist z.B. eine (räumliche) Änderung, d.h. ein Gradient, der Geschwindigkeit und / oder der Verkehrsdichte vor dem Fahrzeug. Die Umgebung des Fahrzeugs erstreckt sich z.B. über einen Bereich von 300 bis 500 Metern. Eine kleinere Umgebung kann ebenfalls vorgesehen sein. Die Umgebung umfasst dabei neben der Fahrspur, auf der sich das Fahrzeug befindet, auch Nebenfahrspuren.

Eine besonders vorteilhafte Ausführungsform verwendet nur die Differenzgeschwindigkeit der Fahrzeuge zur Ansteuerung des verkehrsadaptiven Assistenzsystems. Hiermit wird eine effiziente und gleichzeitig besonders einfach und rechentechnisch leicht zu handhabende Ansteuerung sichergestellt.

Wenn der Ist-Zeitabstand bzw. die Ist-Distanz des Fahrzeugs zum vorausfahrenden Fahrzeug kleiner als der jeweilige vorgebbare untere Grenzwert ist, wird das verkehrsadaptive Assistenzsystem das Fahrzeug vorzugsweise verzögern. Wenn der Ist-Zeitabstand bzw. die Ist-Differenz des Fahrzeugs zum vorausfahrenden Fahrzeug größer als der jeweilige vorgebbare obere Grenzwert ist, wird das verkehrsadaptive Assistenzsystem das Fahrzeug vorzugsweise beschleunigen.

In einer vorteilhaften Weiterbildung wird das verkehrsadaptive Assistenzsystem zusätzlich mit dem Abstand zu wenigstens einem weiteren Fahrzeug angesteuert. Dieses weitere Fahrzeug kann beispielsweise ein Fahrzeug sein, welches sich auf einer der Fahrspur des Fahrzeuges benachbarten Fahrspur neben dem Fahrzeug befindet.

In einer weiteren vorteilhaften Ausführungsform wird das verkehrsadaptive Assistenzsystem zusätzlich mit der Geschwindigkeit von wenigstens einem weiteren Fahrzeug angesteuert. Dies kann beispielsweise die Geschwindigkeit eines Fahrzeuges sein, welches sich auf einer der Fahrspur des Fahrzeuges benachbarten Fahrspur neben dem Fahrzeug befindet.

Die Erfindung ist vorzugsweise als Computerprogramm mit Programmcode-Mitteln realisiert, wobei eine jeweilige Ausprägung des erfindungsgemäßen Verfahrens durchgeführt wird, wenn das jeweilige Programm auf einem Computer ausgeführt wird.

Eine weitere bevorzugte Realisierungsform der Erfindung stellt ein Computerprogrammprodukt mit Programmcode-Mitteln dar, wobei die Programmcode-Mittel die auf einem computerlesbaren Datenträger gespeichert sind, um eine jeweilige Ausprägung des erfindungsgemäßen Verfahrens durchzuführen, wenn das jeweilige Programmprodukt auf einem Computer ausgeführt wird.

Eine bevorzugte Ausführungsform der Erfindung wird nun anhand von Zeichnungen näher erläutert. Dabei zeigen:

Fig. 1    schematisch ein Fahrzeug umfassend ein verkehrsadaptives Assistenzsystem, und ein vorausfahrendes Fahrzeug,

Fig. 2    beispielhaft ein Fundamentaldiagramm eines verkehrsadaptiven Fahrzeugassistenzsystems aus dem Stand der Technik,

Fig. 3    eine schematische Darstellung der zweidimensionalen Fläche der räumlich homogenen und zeitlich unabhängigen Lösungen nach der Drei-Phasen-Theorie des Verkehrs,

Fig. 4    beispielhaft eine erfindungsgemäße Verwendung der Drei-Phasen-Theorie für ein verkehrsadaptives Assistenzsystem.

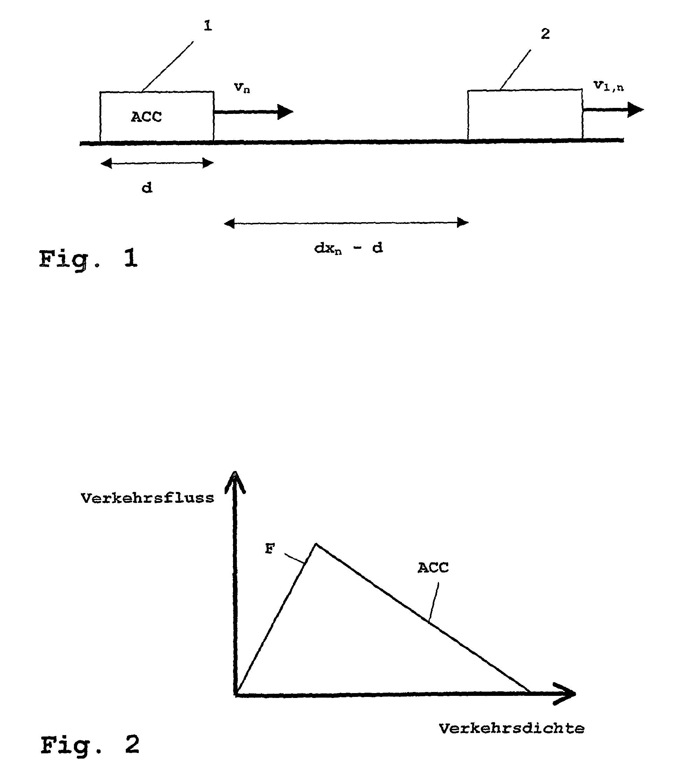

Fig. 1 zeigt ein Fahrzeug 1 mit einem verkehrsadaptiven Assistenzsystem ACC (Automatic Cruise Control) zum Zeitpunkt n. Das Fahrzeug 1 fährt mit der Geschwindigkeit $v_n$. Weiterhin dargestellt ist ein Fahrzeug 2, das mit der Geschwindigkeit $v_{l,n}$ fährt. Die beiden Fahrzeuge 1, 2 weisen zum Zeitpunkt n einen aktuellen Abstand von $dx_n-d$ (dabei entspricht d der Fahrzeuglänge) und einen Zeitabstand von $\Phi$ auf. Dabei kann $\Phi$ von der Fahrzeuggeschwindigkeit $v_n$ und / oder der Geschwindigkeit anderer Fahrzeuge abhängig sein.

Das verkehrsadaptive Assistenzsystem ACC wird unter Verwendung der beschriebenen Größen angesteuert. Es bestimmt zum Zeitpunkt n eine Beschleunigung bzw. Verzögerung (negative Beschleunigung) $a_n$ für das Fahrzeug 1. Damit ergibt sich:

$$a_n = f(K_1((dx_n - d) - \Phi * v_n), K_2(v_{1,n} - v_n)). \qquad (1)$$

Falls

$$v_n = v_{1,n} = v_n^{(0)} \qquad (2)$$

und

$$(dx_n - d) = \Phi * v_n^{(0)} = \Phi^{(0)} * v_n^{(0)} \qquad (3)$$

gilt, so ist $a_n = 0$ (d.h. keine Beschleunigung oder Verzögerung von Fahrzeug 1 durch das verkehrsadaptive Assistenzsystem ACC). Zudem wird ein - als eine Konstante oder als eine Funktion der Fahrzeuggeschwindigkeit (Fahrzeuggeschwindigkeiten) angebbarer - Zeitabstand gefahren:

$$\Phi^{(0)} = (dx_n - d) / v_n^{(0)}. \qquad (4)$$

Dies ergibt bei verschiedenen Verkehrsdichten (die Verkehrsdichte $\rho$ entspricht dem reziproken Fahrzeugabstand, $\rho = 1/dx_n$) und Geschwindigkeiten $v_n^{(0)}$ ein bekanntes Fundamentaldiagramm $q(\rho)$, siehe Fig. 2.
Fig. 2 zeigt ein bekanntes Fundamentaldiagramm $q(\rho)$ eines verkehrsadaptiven Assistenzsystems aus dem Stand der Technik. Bei einem derartigen Fundamentaldiagramm wird über der auf der Abszisse aufgetragenen Verkehrsdichte q auf der Ordinate der Verkehrsfluss $\rho$ aufgetragen. Dabei wird unter Verwendung der Formel (4) der Verkehrsfluss abhängig von der Verkehrsdichte bestimmt, wobei der Verkehrsfluss q definiert ist zu

$$q = \rho * v_n^{(0)}.$$

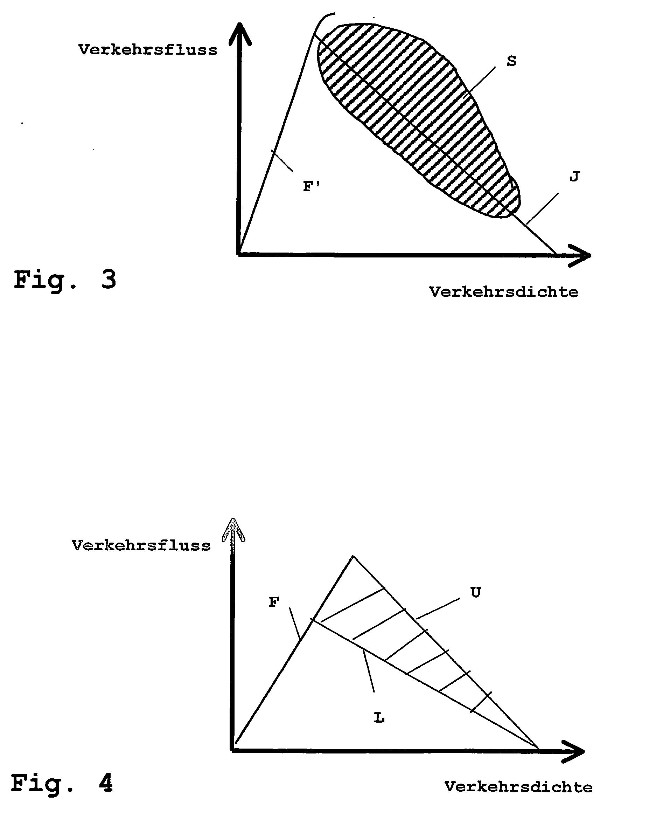

In Fig. 2 ist eine derart bestimmte Linie F eingezeichnet, entsprechend dem freien Verkehr. Weiterhin ist eine Linie ACC eingezeichnet, entsprechend der Einstellung durch ein aus dem Stand der Technik bekanntes, verkehrsadaptives Assistenzsystem. Anders ausgedrückt sind in Fig. 2 alle durch ein aus dem Stand der Technik bekanntes verkehrsadaptives Assistenzsystem selektierbaren Wertepaare aus Verkehrsdichte und Verkehrsfluss aufgetragen.
Für Fig. 3 wird Bezug genommen auf die Drei-Phasen-Theorie des Verkehrs, siehe z.B. B. S. Kerner, Phys. Rev. E Vol. 65, 046138, 2002. In dieser Theorie gibt es kein Fundamentaldiagramm (wie das in Fig. 2 beispielhaft dargestellte), sondern es existiert eine zweidimensionale Fläche der räumlich homogene und zeitlich unabhängigen Lösungen als Wertepaare aus Verkehrsdichte und Verkehrsfluss. Dies ist in Fig. 3 dargestellt. In Fig. 3 ist wiederum auf der Abszisse die Verkehrsdichte $\rho$ aufgetragen und auf der Ordinate der Verkehrsfluss q. Zu erkennen ist eine Kurve F', die dem freien Verkehr entspricht. Weiterhin ist aus Fig. 3 ein Bereich S synchronisierten Verkehrs abzulesen, hier schraffiert dargestellt, und eine Linie J gestauten Verkehrs.
Die in Fig. 3 dargestellte zweidimensionale Fläche der räumlich homogene und zeitlich unabhängigen Lösungen wurde theoretisch vorhergesagt und experimentell bestätigt. Somit wird das aus den Eigenschaften realer Fahrzeugführer resultierende Verhalten nachgebildet. Wie jedoch aus Fig. 2 abzulesen ist, zeigen die aus dem Stand der Technik bekannten verkehrsadaptiven Assistenzsysteme dieses Verhalten prinzipiell nicht. Hieraus resultieren Probleme bei der Ansteuerung verkehrsadaptiver Assistenzsysteme. Ein Problem ist beispielsweise eine fehlende "Dämpfung" solcher Systeme, wenn mehrere mit verkehrsadaptiven Assistenzsystemen ausgerüstete Fahrzeuge hintereinander fahren. Dies kann zu unkontrolliertem Verhalten einzelner Fahrzeuge führen. Hier greift nun die vorliegende Erfindung ein und löst solche Probleme, erfindungsgemäß durch Implementierung der Drei-Phasen-Theorie des Verkehrs in ein Verfahren zur Ansteuerung eines verkehrsadaptiven Assistenzsystems.
In Fig. 4 sind die Auswirkungen eines erfindungsgemäß angesteuerten verkehrsadaptiven Assistenzsystems für den Fall dargestellt, dass der untere Grenzwert als eine erste Konstante und der obere Grenzwert als eine zweite Konstante vorgegeben ist. Dabei ist eine Linie U entsprechend dem oberen Grenzwert, eine Linie L entsprechend dem unteren Grenzwert und eine Linie F freien Verkehrs dargestellt. Auch dieses Darstellung ist wiederum analog zu Fig. 2 interpretierbar, nämlich als alle durch ein erfindungsgemäß angesteuertes verkehrsadaptives Assistenzsystem selektierbaren Wertepaare aus Verkehrsdichte und Verkehrsfluss. Beachtlich ist hier, im Gegensatz zu Fig. 2, die hervorragende Übereinstimmung mit den theoretisch vorhergesagten, experimentell bestätigten und in Fig. 3 dargelegten realen Gegebenheiten. Die erfindungsgemäße Ansteuerung eines verkehrsadaptiven Assistenzsystems ermöglicht eine verblüffende Ähnlichkeit zu dem aus den Eigenschaften realer Fahrzeugführer resultierenden Verhalten.

**Patentansprüche**

1. Verfahren zur Ansteuerung eines in einem Fahrzeug befindlichen verkehrsadaptiven Assistenzsystems mit geschwindigkeits- und / oder abstandsbezogenen Größen des Fahrzeugs und eines vorausfahrenden Fahrzeugs, wobei das Assistenzsystem unter Verwendung dieser Größen eine Beschleunigung oder eine Verzögerung des Fahrzeugs bewirkt,
**dadurch gekennzeichnet,**
**dass** dann, wenn der Ist-Zeitabstand (Ist-Zeitlücke) und / oder der Ist-Abstand (Ist-Distanz) des Fahrzeugs zum vorausfahrenden Fahrzeug größer als ein vorgebbarer jeweiliger unterer und kleiner als ein vorgebbarer jeweiliger oberer Grenzwert ist, das Assistenzsystem unter Ausschluss eines Ziel-Zeitabstandes angesteuert wird.

2. Verfahren nach Anspruch 1,
**dadurch gekennzeichnet,**
**dass** der untere Grenzwert als eine erste Konstante und / oder der obere Grenzwert als eine zweite Konstante vorgebbar ist.

3. Verfahren nach Anspruch 1,
**dadurch gekennzeichnet,**
**dass** der untere Grenzwert abhängig von der Geschwindigkeit des Fahrzeugs und / oder der Geschwindigkeit wenigstens eines weiteren Fahrzeugs vorgebbar ist.

4. Verfahren nach einem der Ansprüche 1 bis 3,
**dadurch gekennzeichnet,**
**dass** der obere Grenzwert abhängig von der Geschwindigkeit des Fahrzeugs und / oder der Geschwindigkeit wenigstens eines weiteren Fahrzeugs vorgebbar ist.

5. Verfahren nach einem der Anspruch 1 bis 4,
**dadurch gekennzeichnet,**
**dass** der untere und/ oder der obere Grenzwert abhängig von der Art der an der Position des Fahrzeugs herrschenden Verkehrszustandsphase vorgebbar ist.

6. Verfahren nach einem der Anspruch 1 bis 5,
**dadurch gekennzeichnet,**
**dass** der untere und/ oder der obere Grenzwert abhängig von der zeitlich-räumlichen Verteilung des Verkehrs in einer Umgebung des Fahrzeugs vorgebbar ist.

7. Verfahren nach einem der Ansprüche 1 bis 6,
**dadurch gekennzeichnet,**
**dass** das Assistenzsystem nur unter Verwendung der Differenzgeschwindigkeit der Fahrzeuge angesteuert wird.

8. Verfahren nach einem der Ansprüche 1 bis 7,
**dadurch gekennzeichnet,**
**dass** wenn die Ist- Zeitlücke bzw. die Ist-Distanz des Fahrzeugs zum vorausfahrenden Fahrzeug kleiner als der jeweilige untere Grenzwert ist das Assistenzsystem das Fahrzeug verzögert.

9. Verfahren nach einem der Ansprüche 1 bis 7,
**dadurch gekennzeichnet,**
**dass** wenn die Ist- Zeitlücke bzw. die Ist-Distanz des Fahrzeugs zum vorausfahrenden Fahrzeug größer als der jeweilige obere Grenzwert ist das Assistenzsystem das Fahrzeug beschleunigt.

**10.** Verfahren nach einem der Ansprüche 1 bis 9,
**dadurch gekennzeichnet,**
**dass** das Assistenzsystem zusätzlich mit dem Abstand zu wenigstens einem weiteren Fahrzeug angesteuert wird.

**11.** Verfahren nach einem der Anspruch 1 bis 10,
**dadurch gekennzeichnet,**
**dass** das Assistenzsystem zusätzlich mit der Geschwindigkeit von wenigstens einem weiteren Fahrzeug angesteuert wird.

**12.** Computerprogramm mit Programmcode-Mitteln, um alle Schritte von jedem beliebigen der Ansprüche 1 bis 11 durchzuführen, wenn das Programm auf einem Computer ausgeführt wird.

**13.** Computerprogrammprodukt mit Programmcode-Mitteln, die auf einem computerlesbaren Datenträger gespeichert sind, um das Verfahren nach jedem beliebigen der Ansprüche 1 bis 11 durchzuführen, wenn das Programmprodukt auf einem Computer ausgeführt wird.


**Claims**

**1.** Method for actuating a traffic-adaptive assistance system which is located in a vehicle using speed-related and/or distance-related variables of the vehicle and of a preceding vehicle, wherein the assistance system uses these variables to bring about acceleration or deceleration of the vehicle, **characterized in that** if the actual time interval and/or the actual distance between the vehicle and the preceding vehicle is greater than a predefinable respective lower limiting value and smaller than a predefinable respective upper limiting value the assistance system is actuated with the exclusion of a target time interval.

**2.** Method according to Claim 1, **characterized in that** the lower limiting value can be predefined as a first constant and/or the upper limiting value can be predefined as a second constant.

**3.** Method according to Claim 1, **characterized in that** the lower limiting value can be predefined as a function of the speed of the vehicle and/or of the speed of at least one further vehicle.

**4.** Method according to one of Claims 1 to 3, **characterized in that** the upper limiting value can be predefined as a function of the speed of the vehicle and/or of the speed of at least one further vehicle.

**5.** Method according to one of Claims 1 to 4, **characterized in that** the lower limiting value and/or the upper limiting value can be predefined as a function of the type of traffic state phase prevailing at the position of the vehicle.

**6.** Method according to one of Claims 1 to 5, **characterized in that** the lower limiting value and/or the upper limiting value can be predefined as a function of the chronological/spatial distribution of the traffic in the surroundings of the vehicle.

**7.** Method according to one of Claims 1 to 6, **characterized in that** the assistance system is actuated only using the differential speed of the vehicles.

**8.** Method according to one of Claims 1 to 7, **characterized in that** if the actual time interval or the actual distance between the vehicle and the preceding vehicle is smaller than the respective lower limiting value the assistance system decelerates the vehicle.

**9.** Method according to one of Claims 1 to 7, **characterized in that** if the actual time interval or the actual distance between the vehicle and the preceding vehicle is greater than the respective upper limiting value the assistance system accelerates the vehicle.

**10.** Method according to one of Claims 1 to 9, **characterized in that** the assistance system is additionally actuated with the distance from at least one further vehicle.

**11.** Method according to one of Claims 1 to 10, **characterized in that** the assistance system is additionally actuated with the speed of at least one further vehicle.

**12.** Computer program with program coding means for carrying out all the steps in any of Claims 1 to 11 when the program is run on a computer.

**13.** Computer program product with program coding means which are stored on a computer-readable data carrier for carrying out the method according to any of Claims 1 to 11 when the program product is run on a computer.


**Revendications**

**1.** Procédé d'amorçage d'un système d'assistance adaptatif en fonction du trafic et situé dans un véhicule, avec des grandeurs relatives à la vitesse et/ou à la distance dudit véhicule et d'un véhicule roulant devant, ledit système d'assistance provoquant une accélération ou une décélération du véhicule en utilisant ces grandeurs, **caractérisé en ce que** le système d'assistance est amorcé à l'exclusion d'un écart cible si l'écart réel en temps (distance en temps) et/ou l'écart réel (distance réelle) du véhicule par rapport au véhicule roulant devant est plus grande qu'une valeur limite inférieure pouvant être prédéfinie et plus petite qu'une valeur limite supérieure pouvant être prédéfinie.

**2.** Procédé selon la revendication 1, **caractérisé en ce que** la valeur limite inférieure peut être prédéfinie comme une première constante et/ou la valeur limite supérieure comme une deuxième constante.

**3.** Procédé selon la revendication 1, **caractérisé en ce que** la valeur limite inférieure peut être prédéfinie en fonction de la vitesse du véhicule et/ou de la vitesse d'un autre véhicule au moins.

**4.** Procédé selon l'une quelconque des revendications 1 à 3, **caractérisé en ce que** la valeur limite supérieure peut être prédéfinie en fonction de la vitesse du véhicule et/ou de la vitesse d'un autre véhicule au moins.

**5.** Procédé selon l'une quelconque des revendications 1 à 4, **caractérisé en ce que** la valeur limite inférieure et/ou la valeur limite supérieure peut être prédéfinie en fonction du type de phase des conditions du trafic présentes au niveau de la position du véhicule.

**6.** Procédé selon l'une quelconque des revendications 1 à 5, **caractérisé en ce que** la valeur limite inférieure et/ou supérieure peut être prédéfinie en fonction de la répartition en temps - dans l'espace du trafic dans l'environnement du véhicule.

**7.** Procédé selon l'une quelconque des revendications 1 à 6, **caractérisé en ce que** le système d'assistance n'est amorcé qu'en utilisant la vitesse différentielle du véhicule.

**8.** Procédé selon l'une quelconque des revendications 1 à 7, **caractérisé en ce que** le système d'assistance décélère le véhicule lorsque l'écart réel en temps ou la distance réelle du véhicule par rapport au véhicule roulant devant est plus petit que la valeur limite inférieure respective.

**9.** Procédé selon l'une quelconque des revendications 1 à 7, **caractérisé en ce que** le système d'assistance accélère le véhicule lorsque l'écart réel en temps ou la distance réelle du véhicule par rapport au véhicule roulant devant est plus grand que la valeur limite supérieure respective.

**10.** Procédé selon l'une quelconque des revendications 1 à 9, **caractérisé en ce que** le système d'assistance est amorcé en complément avec la distance par rapport à un autre véhicule au moins.

**11.** Procédé selon l'une quelconque des revendications 1 à 10, **caractérisé en ce que** le système d'assistance est amorcé en complément avec la vitesse d'un autre véhicule au moins.

**12.** Programme d'ordinateur avec des moyens codes programmes permettant d'effectuer l'ensemble des pas de chacune des revendications 1 à 11, lorsque le programme est exécuté sur un ordinateur.

**13.** Produit programme d'ordinateur avec des moyens codes programmes mémorisés sur un support informatique pouvant être lu par un ordinateur, pour permettre d'effectuer le procédé selon l'une quelconque des revendications 1 à 11, lorsque le produit programme est exécuté sur un ordinateur.

1

2

$v_n$

$v_{1,n}$

ACC

d

$dx_n - d$

# Fig. 1

Verkehrsfluss

F

ACC

Verkehrsdichte

# Fig. 2

Verkehrsfluss

S

F'

J

Fig. 3

Verkehrsdichte

Verkehrsfluss

F

U

L

Fig. 4

Verkehrsdichte